# EUROPEAN PATENT SPECIFICATION

(11) **EP 1 516 897 B1**
(45) Date of publication and mention of the grant of the patent: **30.11.2011**
(21) Application number: 03733175.8
(22) Date of filing: 29.05.2003
(51) Int. Cl.: C09D 109/00, C09D 107/00, C09D 7/14, C08J 3/215

(54) **WATER-BASED COATING MATERIAL FOR RUBBER PRODUCT**
WASSERLACK FÜR GUMMIPRODUKT
MATERIAU DE REVETEMENT A BASE D'EAU POUR ARTICLE EN CAOUTCHOUC

(30) Priority: 29.05.2002 JP 2002156243
(43) Date of publication of application: 23.03.2005
(73) Proprietor: Bridgestone Corporation, Tokyo 104-0031 (JP)
(72) Inventor: MATUKI, Tomohiro c/o BRIDGESTONE CORPORAITON, Kodaira-shi, Tokyo 187-0031 (JP)
(74) Representative: Whalley, Kevin
(86) International application number: PCT/JP2003/006782
(87) International publication number: WO 2003/099948

(56) References cited:
- WO-A1-01/55266
- GB-A- 375 786
- GB-A- 427 228
- JP-A- 6 207 135
- JP-A- 6 228 463
- JP-A- 6 286 425
- JP-A- 8 072 166
- JP-A- 8 269 369
- JP-A- 10 000 907
- JP-A- 11 059 137
- JP-A- 56 152 876
- US-A- 4 325 852
- US-A- 4 329 265
- US-A- 4 946 717
- US-A- 5 234 988

## Description

### Technical Field

The present invention relates to some types of water-based paint (hereinafter simply referred to as "paint" in some cases) for rubber products. The present invention particularly relates to a type of water-based paint, suitable for painting or coating unvulcanized rubber surfaces, for rubber products; a method for manufacturing the type of water-based paint; a coating method making use of the type of water-based paint; and a method for manufacturing a tire.

### Background Art

In general, when rubber products such as tires are painted or coated, crosslinkable or vulcanizable types of paint are used because such types of paint have high adhesion to the rubber products. A crosslinkable type of paint usually contains an organic solvent and a rubber composition, dissolved therein, prepared by mixing pigment or dye with a rubber matrix principally containing, natural rubber, styrene-butadiene rubber, or the like (for example, Japanese Unexamined Patent Application Publication No. 11-256082 and other documents).

Since organic solvents have high volatility and therefore have a disadvantage in that they diffuse in the air in steps of manufacturing a type of paint and/or a drying step subsequent to a coating step, there is a problem in that such organic solvents are not preferable in view of environmental protection. Improvements must be made on work environment.

On the other hand, various types of water-based paint containing no solvent have been proposed (for example, Japanese Unexamined Patent Application Publication No. 10-195368 US 4946717, GB427228, WO 01/55266, GB375786, US4329265, US 4325852 and JP 56152876). In order to prepare a type of paint containing a rubber matrix, it is essential to use an organic solvent in which such a rubber matrix is soluble and which has high workability and coating properties. Therefore, known types of water-based paint must principally contain so-called water-based resins acting as matrices.

Such water-based resins are inferior in vulcanization properties as compared with the type of paint containing the rubber matrix. Therefore, there is problem in that when a known type of water-based paint containing a water-based resin is applied onto an unvulcanized rubber product, the type of paint can be transferred to a die in many cases. Furthermore, there is problem in that when the known type of water-based paint is used to paint or coat vulcanized rubber products, the known type of water-based paint is inferior in abrasion resistance as compared with other types of rubber-based paint containing organic solvents.

In order to solve the above problems, it is an object of the present invention to provide a type of water-based paint for rubber products, a method for manufacturing the type of water-based paint, a coating method making use of the type of water-based paint, and a method for manufacturing a tire. The type of water-based paint contains no organic solvent, has substantially the same workability and coating properties as those of known types of water-based paint if the type of water-based paint is applied onto rubber products, and also has high adhesion to such rubber products.

### Disclosure of Invention

In order to solve the above problems, a type of water-based paint for rubber products according to the present invention, which is used for painting or coating unvulcanized rubber surfaces principally contains
a type of water-based rubber latex containing a carboxy -modified styrene-butadiene rubber acting as a dispersoid;
an inorganic pigment and/or an organic pigment; and
at least one selected from the group consisting of a vulcanizing agent, a vulcanizing accelerator, and a vulcanizing aid.

The type of water-based paint according to the present invention preferably further contains titanium oxide of which the amount is 20 to 200 parts by weight with respect to 100 parts by weight of the type of rubber. The pigment and/or the vulcanizing agent preferably contains zinc oxide. The type of water-based paint preferably further contains at least one selected from the group consisting of a thickening agent, a dispersing agent, a surfactant, and an anti-foaming agent.

A method for manufacturing the type of water-based paint for rubber products according to the present invention preferably includes a step of preparing a mill base containing water and the pigment dispersed therein and a step of mixing the obtained mill base with the type of water-based rubber latex. The step of preparing the mill base preferably includes a sub-step of adding a dispersing agent to the water.

A coating method according to the present invention includes a step of using of the type of water-based paint of the present invention. In this method, the type of water-based paint is discharged by an inkjet process.

A method for manufacturing a pneumatic tire according to the present invention includes a step of applying the type of water-based paint of the present invention onto an unvulcanized tire to make the information of the unvulcanized tire identifiable. In this method, the information of the unvulcanized tire can be identified depending on the color or amount of the type of water-based paint applied onto the tire.

According to the present invention, since the type of water-based paint principally contains the type of water-based rubber latex, the type of water-based paint containing the type of rubber acting as a matrix can be prepared without using any organic solvent. According to the method for manufacturing the type of paint of the present invention, the type of rubber is not coagulated when the pigment is mixed with the type of water-based rubber latex; hence, the type of paint having high pigment content can be manufactured. According to the coating method, good coatings can be obtained without depending on a printing/coating process. In the method for manufacturing a pneumatic tire according to the present invention, tires from which any type of paint is hardly removed and which have good appearance can be obtained.

### Best Mode for Carrying Out the Invention

Embodiments of the present invention will now be described in detail.

A type of water-based paint for rubber products according to the present invention principally contains a type of water-based rubber latex containing water and carboxy-modified styrene-butadiene rubber (c-SBR) dispersed therein. Therefore the type of water-based paint containing the carboxy-modified styrene-butadiene rubber acting as a matrix can be prepared without dissolving the type of rubber in a solvent. The carboxy-modified styrene-butadiene rubber can be used alone or in combination with any of natural rubber (NR), butadiene rubber (BR),
chloroprene rubber (CR), acrylonitrile-butadiene rubber (NBR), isoprene rubber (IR), styrene-butadiene rubber (SBR), modified styrene-butadiene rubber, butyl rubber (IIR) and acrylonitrile-styrene-butadiene rubber (NSBR). The type of
rubber latex may be used in combination with a water-based resin. The type of rubber latex can be prepared by a known process, for example, an emulsion polymerization process.

In particular, because the when the type of water-based rubber latex is the carboxy-modified styrene-butadiene rubber, strong agitation can be performed. Therefore, the type of water-based latex can be readily formed into a type of paint in a manufacturing step and can be continuously discharged by a printing/coating process such as an inkjet process or a spraying process without causing plugging. The carboxy-modified styrene-butadiene rubber used herein can be prepared by copolymerizing styrene, butadiene, and an ethylenic unsaturated acid monomer, particularly an ethylenic unsaturated carboxylic acid monomer, which is at least one selected from the group consisting of acrylic acid, methacrylic acid, cinnamic acid, itaconic acid, fumaric acid, and maleic acid.

Examples of the pigment include, but are not limited to, an inorganic pigment and an organic pigment conventionally used. Those pigments may be used alone or in combination. The following pigments may be arbitrarily used: for example, white pigments, such as zinc white and titanium oxide, widely used; mineral pigments such as zinc oxide, iron oxide, and chromium oxide; an organic pigment such as phthalocyanine; and corrosion-resistant pigments such as zinc phosphate. The amount of the pigment is 20 to 200 parts by weight and preferably 25 to 50 parts by weight with respect to 100 parts by weight of the type of rubber.

When the pigment is dispersed in the type of water-based rubber latex by mixing the pigment and the type of latex, the type of rubber can be coagulated in some cases. Therefore, a mill base is preferably prepared in advance by dispersing the pigment in water and then mixed with the type of water-based rubber latex. In this case, the use of a dispersing agent in the dispersing operation allows the mill base to have high pigment content. The amount of the dispersing agent used is usually 0.05% to 3% by weight of the amount of the pigment and the mill base can be readily prepared when the pigment content is about 70% by weight.

In the type of paint of the present invention, calcium carbonate, clay, or the like acting as an extender pigment may be used in combination with the pigment. When the type of paint contains the clay, the type of paint has high brightness. The clay includes fine particles principally containing aluminum silicate prepared by refining natural clay by levigation. Examples of the clay include kaolin, catalpo, hakubanka, china clay, and suprex clay.

In the present invention, at least one selected from the group consisting of a vulcanizing agent, a vulcanizing accelerator, and a vulcanizing aid (a crosslinking agent) is used, whereby the adhesion to a rubber material can be increased. When the type of paint of the present invention is applied onto a rubber product such as a tire, that is, when the type of paint is used to paint or coat an unvulcanized rubber product in particular, the type of paint preferably contains such a vulcanizing agent, a vulcanizing accelerator, or a vulcanizing aid in order to achieve high vulcanization degree, although vulcanization can be achieved by the effect of a vulcanizing agent, a vulcanizing accelerator, or a vulcanizing aid contained in the unvulcanized rubber product. This allows the type of paint to be incorporated with the rubber product by co-vulcanization when the rubber product that has been painted or coated is subjected to vulcanization molding, whereby the type of paint can be prevented from being transferred to a die.

Examples of the vulcanizing agent include sulfur, selenium, tellurium, a compound containing one of those elements, an aromatic nitro compound, and a peroxide, selenium and tellurium being homologous elements of sulfur. Those elements and compounds can be used to vulcanize a rubber component of the type of water-based rubber latex. Sulfur is particularly preferable in view of vulcanization effects. The amount of the vulcanizing agent used is preferably 0.1% to 5% by weight of the total amount of the type of rubber. Carboxy-modified styrene-butadiene rubber can be crosslinked at low temperature using only a metal oxide.

Examples of the vulcanizing accelerator include compounds such as thiazoles, sulphenamides, thiurams, guanidines, thioureas, aldehyde-ammonias, aldehyde-amines, dithiocarbamates, and xanthogenates. Those compounds may be used alone or in combination. The vulcanizing aid is preferably zinc oxide.

The type of paint of the present invention principally contains the type of water-based rubber latex, the pigment, and an agent for vulcanization as described above and can be used by adjusting the viscosity to a value suitable for coating operations using water. Manufacturing properties of the type of paint and the coating workability thereof can be improved by adding a surfactant, an anti-foaming agent, and/or a thickening agent to the type of paint according to needs. Since an increase in the content of filler causes the type of paint to foam in particular, the surfactant and the anti-foaming agent are preferably used alone or in combination. The content of the anti-foaming agent and the content of the surfactant are preferably 0.1% to 3% by weight.

In order to reduce the surface tension and in order to enhance the wettability to rubber, the surface is preferably used. The type of paint containing no surfactant has high surface tension and is therefore repelled by a rubber material when the type of paint containing no surfactant is applied onto the rubber material. However, if the type of paint contains the surfactant, the type of paint can be prevented from being repelled by the rubber material, that is, the type of paint has superior coating properties. Examples of the surfactant include an acetylenic surfactant and a dioctyl sulfosuccinic acid-containing surfactant. The content of the surfactant is preferably 0.5% to 5% by weight. Examples of the surfactant further include low-volatile polymer solvents and higher alcohols such as ethylene glycol and carbitol acetate in addition to the surfactants described above.

A coating method of the present invention makes use of the type of paint of the present invention and a specific technique used in the method is not particularly limited. Examples of the technique include an inkjet process, roll transfer process, and spraying process that make use of a known type of paint containing an organic solvent. When such an inkjet process and spraying process that are readily plugged are used, the type of water-based rubber latex is preferably modified styrene-butadiene rubber as described above. The viscosity of the type of paint of the present invention varies depending on the coating method and the coating pressure and is preferably 200 to 280 mPa·s when, for example, an inkjet gun is used and the pressure is 0.5 MPa.

After the type of water-based paint of the present invention is applied onto an unvulcanized rubber product, the resulting rubber product can be vulcanized. The composition, uses, and type of the rubber product are not particularly limited. The type of water-based paint of the present invention is preferably applied onto a tire, which is a rubber product, in particular. When an unvulcanized tire is coated with the type of paint, the information of the unvulcanized tire can be identified. In particular, the information of the unvulcanized tire can be securely identified by selecting the color and/or coating amount of the type of paint and particularly the width of a line formed using the type of paint.

Examples will now be described in detail.

Three types of paint were prepared in respective Examples 1 (Comparative) and 2, and 3 (according to the invention) by the procedure below such that the compositions (part by weight) shown in Table 1 described below were obtained.

A dispersing agent, an anti-foaming agent, a surfactant, a vulcanizing agent, and a vulcanizing accelerator were dispersed in water, whereby an aqueous solution was prepared. Titanium oxide (TiO₂) and zinc oxide were added to the solution, whereby a mill base was prepared. The mill base was mixed with a type of water-based rubber latex and the viscosity was adjusted using water, whereby each type of paint was prepared. For comparison, a conventional type of dedicated paint was prepared.

The types of paint prepared in Examples and the conventional type of paint containing an organic solvent were measured for viscosity by determining the flowing time using a Zahn cup. These types of paint were each applied onto corresponding unvulcanized rubber products using an inkjet gun (a dot-marking unit manufactured by Eiko Denshi Kabushikigaisha). The types of paint applied thereonto were evaluated whether plugging was caused and also evaluated for capability to avoid being transferred to a die used for vulcanization, and the sharpness of coated areas of the rubber products was evaluated after the rubber products were vulcanized. Standards for evaluating the types of paint applied thereonto are as described below. Evaluation results are summarized in Table 1 described below.

### [Plugging]

The types of paint were evaluated whether inner portions of the inkjet gun were plugged with each type of paint.
A: No plugging
B: Substantially no plugging
C: Plugged during operation
D: Plugged just after the start of operation

### [Sharpness of Coated Areas]

The appearance of coated areas of the rubber products was visually evaluated after the rubber products were vulcanized.
A: High whiteness
B: Slightly dull
C: Dull
D: Not white

### [Capability to Avoid Being Transferred to Die]

The appearance of the die was visually evaluated after the vulcanization was performed.
A: No transfer occurs.
B: Transfer occurs due to an increase in the number of coating operations in some cases.
C: Transfer occurs due to an increase in the number of coating operations.
D: Transfer occurs.

**Table 1**

| | | | Comparative Example 1 | Example 2 | Example 3 | Conventional Paint |
|---|---|---|---|---|---|---|
| Latex | NR¹⁾ | | 167 | - | - | 75 |
| | SBR | | - | - | - | 25 |
| | c-SBR²⁾ | | - | 200 | 200 | 30 |
| Titanium Oxide | | | 50 | 50 | 100 | 35 |
| Clay | | | - | - | - | 10 |
| Zinc Oxide | | | 3 | 3 | 3 | - |
| Vulcanizing Agent³⁾ | | | 1.5 | 1.5 | 1.5 | 3.0 |
| Vulcanizing Accelerator⁴⁾ | | | 3 | 3 | 3 | 2.0 |
| Anti-foaming Agent⁵⁾ | | | 1 | 1 | 1 | - |
| Humectant⁶⁾ | | | 5 | 5 | 5 | - |
| Naphtha/Kerosene | | | - | - | - | 7/3 |
| Water | | | 100 | 75 | 85 | - |
| Paint Viscosity | | | 12"30 | 13"10 | 12"80 | 12"20 |
| State of Coated Areas | | Plugging | D | B | B | B |
| | | Sharpness | C | B | A | A |
| | | Transfer | A | B | B | A |

| | | | | | | |
|---|---|---|---|---|---|---|
| 1) HARRISON LATEX manufactured by GOLDEN HOPE 2) Type 0545 manufactured by JSR Corporation 3) Sulfur 4) Nocceler TZC manufactured by Ouchishinko Chemical Industrial Co., Ltd. 5) SN-Defoamer 440 manufactured by San Nopco Ltd. 6) An acetylenic surfactant, Surfynol, manufactured by Nisshin Chemical Industries Co., Ltd. | | | | | | |

As is clear from the evaluation results shown in Table 1, the type of water-based paint prepared in Comparative Example 1 has a capability to avoid being transferred to the die, the capability being substantially equal to that of the conventional paint containing the organic solvent. The type of paint prepared in Example 2 has high sharpness and a satisfactory capability to avoid being transferred to the die, although these properties are inferior to those of the conventional type of paint. The evaluation of the occurrence of plugging due to the type of paint prepared in Example 2 is satisfactory and substantially the same as that of the conventional type of paint. Furthermore, the type of paint prepared in Example 3 has substantially the same sharpness as that of the conventional type of paint and also has a satisfactory capability to avoid being transferred to the die. The evaluation of the occurrence of plugging due to the type of paint prepared in Example 3 is satisfactory.

### Industrial Applicability

As described above, the present invention provides a water-based paint for rubber products, a method for manufacturing the water-based paint, a coating method making use of the water-based paint, and a method for manufacturing a tire. The water-based paint does not contain any organic solvent contained in known paints, has substantially the same workability and coating properties as those of known paints, also has high adhesion to rubber products, and is ecologically friendly.

## Claims

1. A type of water-based paint for rubber products, which is used for painting or coating unvulcanized rubber surfaces, principally containing:
a type of water-based rubber latex containing a carboxy -modified styrene-butadiene rubber acting as a dispersoid;
an inorganic pigment and/or an organic pigment; and
at least one selected from the group consisting of a vulcanizing agent, a vulcanizing accelerator, and a vulcanizing aid.

2. The type of water-based paint for rubber products according to Claim 1, further containing titanium oxide of which the amount is 20 to 200 parts by weight with respect to 100 parts by weight of the type of rubber.

3. The type of water-based paint for rubber products according to Claim 1, wherein the pigment and/or the vulcanizing agent contains zinc oxide.

4. The type of water-based paint for rubber products according to Claim 1, further containing at least one selected from the group consisting of a thickening agent, a dispersing agent, a surfactant, and an anti-foaming agent.

5. A method for manufacturing the type of water-based paint for rubber products according to any one of Claims 1 to 4, comprising a step of preparing a mill base containing water and the pigment dispersed therein and a step of mixing the obtained mill base with the type of water-based rubber latex.

6. The manufacturing method according to Claim 5, wherein the step of preparing the mill base includes a sub-step of adding a dispersing agent to the water.

7. A coating method comprising a step of using of the type of water-based paint for rubber products according to any one of Claims 1 to 4.

8. The coating method according to Claim 7, wherein the type of paint is discharged by an inkjet process.

9. A method for manufacturing a pneumatic tire, comprising a step of applying the type of water-based paint for rubber products according to any one of Claims 1 to 4 onto an unvulcanized tire to make the information of the unvulcanized tire identifiable.

10. The method for manufacturing a pneumatic tire according to Claim 9, wherein the information of the unvulcanized tire can be identified depending on the color or amount of the type of water-based paint, applied onto the tire, for rubber products.

## Patentansprüche

1. Lacktyp auf Wasserbasis für Gummiprodukte, der zum Lackieren oder Beschichten von unvulkanisierten Gummiflächen benutzt wird, der prinzipiell Folgendes beinhaltet:
einen Kautschuklatextyp auf Wasserbasis, der einen als Dispersoid wirkenden carboxy-modifizierten Styrol-Butadien-Kautschuk enthält,
ein anorganisches Pigment und/oder ein organisches Pigment; und
wenigstens ein Element ausgewählt aus der Gruppe bestehend aus einem Vulkanisationsmittel, einem Vulkanisationsbeschleuniger und einem Vulkanisationshilfsmittel.

2. Lacktyp auf Wasserbasis für Gummiprodukte nach Anspruch 1, der ferner Titanoxid in einer Menge von 20 bis 200 Gewichtsteilen mit Bezug auf 100 Gewichtsteile des Kautschuktyps enthält.

3. Lacktyp auf Wasserbasis für Gummiprodukte nach Anspruch 1, wobei das Pigment und/oder das Vulkanisationsmittel Zinkoxid enthält.

4. Lacktyp auf Wasserbasis für Gummiprodukte nach Anspruch 1, der ferner wenigstens ein Element ausgewählt aus der Gruppe bestehend aus einem Verdickungsmittel, einem Dispersionsmittel, einem Tensid und einem Antischaummittel enthält.

5. Verfahren zur Herstellung des Lacktyps auf Wasserbasis für Gummiprodukte nach einem der Ansprüche 1 bis 4, das einen Schritt des Herstellens eines Mahlguts, das Wasser und das darin dispergierte Pigment enthält, und einen Schritt des Mischens des erhaltenen Mahlguts mit dem Kautschuklatextyp auf Wasserbasis beinhaltet.

6. Herstellungsverfahren nach Anspruch 5, wobei der Schritt des Herstellens des Mahlguts einen Unterschritt des Zugebens eines Dispersionsmittels zu dem Wasser beinhaltet.

7. Beschichtungsverfahren, das einen Schritt des Verwendens des Lacktyps auf Wasserbasis für Gummiprodukte nach einem der Ansprüche 1 bis 4 enthält.

8. Beschichtungsverfahren nach Anspruch 7, wobei der Lacktyp durch einen Tintenstrahlprozess abgegeben wird.

9. Verfahren zur Herstellung eines Luftreifens, das einen Schritt des Aufbringens des Lacktyps auf Wasserbasis für Gummiprodukte nach einem der Ansprüche 1 bis 4 auf einen unvulkanisierten Reifen beinhaltet, um die Informationen des unvulkanisierten Reifens identifizierbar zu machen.

10. Verfahren zur Herstellung eines Luftreifens nach Anspruch 9, wobei die Informationen des unvulkanisierten Reifens anhand der Farbe oder der Menge des auf den Reifen aufgebrachten Lacktyps auf Wasserbasis für Gummiprodukte identifiziert werden können.

## Revendications

1. Type de peinture à base d'eau pour produits en caoutchouc, utilisée pour peindre ou revêtir des surfaces de caoutchouc non vulcanisées, contenant pour l'essentiel :
un type de latex de caoutchouc à base d'eau, contenant un caoutchouc de styrène-butadiène à modification carboxylique servant de dispersoïde ;
un pigment inorganique et/ou un pigment organique ; et
au moins un agent sélectionné dans le groupe constitué d'un agent de vulcanisation, d'un accélérateur de vulcanisation et d'un auxiliaire de vulcanisation.

2. Type de peinture à base d'eau pour produits en caoutchouc selon la revendication 1, contenant en outre de l'oxyde de titane, dont la quantité représente 20 à 200 parties en poids par rapport à 100 parties en poids du type de caoutchouc.

3. Type de peinture à base de caoutchouc pour produits en caoutchouc selon là revendication 1, dans lequel le pigment et/ou l'agent de vulcanisation contient de l'oxyde de zinc.

4. Type de peinture à base de caoutchouc pour produits en caoutchouc selon la revendication 1, contenant en outre au moins un agent sélectionné dans le groupe constitué d'un agent d'épaississement, d'un agent de dispersion, d'un agent de surface et d'un agent anti-mousse.

5. Procédé de production du type de peinture à base d'eau pour produits en caoutchouc selon l'une quelconque des revendications 1 à 4, comprenant une étape de préparation d'un produit broyé, contenant de l'eau et le pigment qui y est dispersé, et une étape de mélange du produit broyé produit avec le type de latex
de caoutchouc.

6. Procédé de production selon la revendication 5, dans lequel l'étape de préparation du produit broyé englobe une étape auxiliaire d'addition d'un agent de dispersion dans l'eau.

7. Procédé de revêtement, comprenant une étape d'utilisation du type de peinture à base d'eau pour produits en caoutchouc selon l'une quelconque des revendications à 4.

8. Procédé de revêtement selon la revendication 7, dans lequel le type de peinture est déchargé par un processus à jet d'encre.

9. Procédé de fabrication d'un bandage pneumatique, comprenant une étape d'application du type de peinture à base d'eau pour produits en caoutchouc selon l'une quelconque des revendications 1 à 4 sur un bandage pneumatique non vulcanisé pour permettre l'identification des informations concernant le bandage pneumatique non vulcanisé.

10. Procédé de fabrication d'un bandage pneumatique selon la revendication 9, dans lequel les informations concernant le bandage pneumatique non vulcanisé peuvent être identifiées en fonction de la couleur ou de la quantité du type de peinture à base d'eau pour produits en caoutchouc appliquée sur le bandage pneumatique.
